# EUROPEAN PATENT APPLICATION

(11) **EP 2 682 263 A2**
(43) Date of publication of application: **08.01.2014**
(21) Application number: 13174449.2
(22) Date of filing: 01.07.2013
(51) Int. Cl.: B32B 15/01, C25D 5/12, C25D 5/50, C22C 9/06, H01B 1/02, H01R 13/03

(54) **Tin-plated copper-alloy material for terminal and method for producing the same**

(30) Priority: 02.07.2012 JP 2012148575
(71) Applicant: Mitsubishi Materials Corporation, Chiyoda-ku Tokyo 100-8117 (JP)
(72) Inventor: Taninouchi, Yuki, Naka-shi, Ibaraki 311-0102 (JP); Kato, Naoki, Naka-shi, Ibaraki 311-0102 (JP); Kubota, Kenji, Naka-shi, Ibaraki 311-0102 (JP)
(74) Representative: Gille Hrabal

(57) **Abstract**

Tin-plated copper-alloy material for terminal in which: a Cusn alloy layer/a NiSn alloy layer/a Ni or Ni alloy layer are formed between a Sn-based surface layer and a substrate made of Cu or Cu alloy; the Cusn alloy layer is a compound-alloy layer containing Cu₆Sn₅ as a major proportion and a part of Cu in the Cu₆Sn₅ is displaced by Ni; the Nisn alloy layer is a compound-alloy layer containing Ni₃Sn₄ as a major proportion and a part of Ni in the Ni₃Sn₄ is displaced by Cu; an average interval S of point peaks of the Cusn alloy layer is not less than 0.8 µm and not more than 2.0 µm; an average thickness of the Sn-based surface layer is not less than 0.2 µm and not more than 0.6 µm; an exposed-area rate of the CuSn alloy layer exposed at a surface of the Sn-based surface layer is not less than 1% and not more than 40%; an average of equivalent-circle diameter of the exposed portions of the Cusn alloy layer exposed at the surface of the Sn-based surface layer is not less than 0.1 µm and not more than 1.5 µm; and dynamic friction coefficient is not more than 0.3.

## Description

### BACKGROUND OF THE INVENTION

### Field of the Invention

The present invention relates to tin-plated copper-alloy material for terminal and a method for producing the same that is useful for a terminal for a connector used for connecting electrical wiring of automobiles or personal products, in particular, which is useful for a terminal for a multi-pin connector.

Priority is claimed on Japanese Patent Application No. 2012-148575, filed on July 2, 2012, the content of which is incorporated herein by reference.

### Description of Related Art

Tin-plated copper-alloy material for terminal is formed by reflowing after Cu-plating and Sn-plating on a substrate made of copper alloy so as to have a Sn-based surface layer as a surface layer and a CuSn alloy layer as a bottom layer, and is widely used as material for terminal.

In recent years, for example, electrization is rapidly progressed in vehicle and circuits are increased in the electrical equipment, so that connector used in the circuit is remarkably downsized and the pins thereof are increased. When the connector have a lot of pins, even though a force for inserting the connector for a pin is small, a large force is required for inserting the connector for all pins; therefore, it is apprehended that productivity is deteriorated. Accordingly, it is attempted to reduce the force for inserting for a pin by reducing the friction coefficient of tin-plated copper-alloy material.

For example, in Japanese Unexamined Patent Application, First Publication No.2007-100220, a surface-exposure rate of the CuSn alloy layer is configured by roughing the substrate. However, there are problems of increasing contact resistance or deteriorating soldering wettability. Also, in Japanese Unexamined Patent Application, First Publication No.2007-63624, average of surface roughness of the CuSn alloy layer is configured. However, for example, there is a problem in which a dynamic friction coefficient cannot be reduced to 0.3 or less for further improving insertion/extraction performance of the connector.

Moreover, in Japanese Unexamined Patent Application, First Publication No.2005-350774, a construction of substrate/Ni/CuSn/Sn is made by plating and reflowing of Ni/Cu/Sn on a substrate for reducing dynamic friction coefficient by controlling thicknesses of CuSn alloy layer and Sn Layer. However, it is necessary to control the Sn layer thin extremely; so that there are problems in that the contact resistance is increased or the soldering wettability is deteriorated.

### SUMMARY OF THE INVENTION

### Problems to be Solved by the Invention

In order to reduce the friction coefficient of tin-plated copper-alloy material for terminal, it is effective to thin the Sn-layer at the surface layer, so that a part of the CuSn alloy layer that is harder than Sn is exposed at the surface layer; as a result, the friction coefficient can be extremely reduced. However, if the CuSn alloy layer is exposed at the surface layer, Cu oxide is generated at the surface layer. As a result, the contact resistance is increased and the wettability of solder is deteriorated. Furthermore, even though the average of the surface roughness of the CuSn alloy layer and the like is controlled, the dynamic friction coefficient cannot be reduced to 0.3 or less.

The present invention is achieved in consideration of the above circumstances, and has an object of reducing dynamic friction coefficient to 0.3 or less with an excellent electrical-connection characteristic so as to provide tin-plated copper-alloy material for terminal and a method for producing the same with an excellent insertion/extraction performance.

### Means for Solving the Problem

The inventors recognized that it is advantageous for reducing the dynamic friction coefficient to expose the lower CuSn alloy layer slightly at the thin surface Sn layer by pursuing extensive studies. In this recognition, the inventors found that: in order to prevent deterioration of electrical-connection characteristic that is caused by reducing the thickness of the Sn layer, it is necessary to control surface exposure of CuSn alloy layer in a limited range. Finally, the inventors concluded that a shape of a boundary face between Sn layer and the lower CuSn alloy layer is important. That is to say, it was found as a result of studies that: because the dynamic friction coefficient is largely influenced by a construction from the surface to several hundreds nm of depth, if the vicinity of the surface layer is composite construction of Sn and CuSn alloy, soft Sn between hard CuSn alloy layers lubricates so that the dynamic friction coefficient can be reduced. In this case, the inventors found that it is important that the boundary face between the Sn layer and CuSn alloy layer has precipitous asperity, and the existence of Ni is also important in order to obtain the preferred shape. In the above recognition, the inventors found following means for solving the problems.

Namely, tin-plated copper-alloy material for terminal according to the present invention is tin-plated copper-alloy material for terminal in which a Sn-based surface layer is formed on a surface of a substrate made of Cu or Cu alloy, and a CuSn alloy layer/a NiSn alloy layer/a Ni or Ni alloy layer are formed in sequence from the Sn-based surface layer between the Sn-based surface layer and the substrate: the CuSn alloy layer is a compound-alloy layer containing Cu₆Sn₅ as a major proportion and a part of Cu in the Cu₆Sn₅ is displaced by Ni; the NiSn alloy layer is a compound-alloy layer containing Ni₃Sn₄ as a major proportion and a part ofNi in the Ni₃Sn₄ is displaced by Cu; an average interval S of point peaks of the CuSn alloy layer is not less than 0.8 µm to not more than 2.0 µm; an average thickness of the Sn-based surface layer is not less than 0.2 µm to not more than 0.6 µm; an exposed-area rate of the CuSn alloy layer exposed at a surface of the Sn-based surface layer is not less than 1% to not more than 40%; an average of equivalent-circle diameter of exposed portions of the CuSn alloy layer exposed at the surface of the Sn-based surface layer is not less than 0.1 µm to not more than 1.5 µm; and dynamic friction coefficient is not more than 0.3.

The average thickness of the Sn-based surface layer is set in the range of not less than 0.2 µm to not more than 0.6 µm; the exposed-area rate of the CuSn alloy layer is set in the range of 1 to 40% at the surface of the Sn-based surface layer; and the average of the equivalent-circle diameter of the exposed portions of the CuSn alloy layer exposed at the surface of the Sn-based surface layer is set in the range of not less than 0.1 µm to not more than 1.5 µm : thereby realizing the dynamic friction coefficient not more than 0.3. In this case, since the (Cu, Ni)₆Sn₅ alloy layer in which a part of Cu is displaced by Ni and the (Ni, Cu)₃Sn₄ layer in which a part of Ni is displaced by Cu exist, the CuSn alloy layer has precipitous asperity having the average interval S of the point peaks in the range of not less than 0.8 to not more than 2.0 µm, so that the exposed-area rate and a particle diameter of exposed portions are limited in a limited range.

The average thickness of the Sn-based surface layer is set in the range of not less than 0.2 µm to not more than 0.6 µm, because: if it is less than 0.2 µm, the soldering wettability and electrical-connection reliability may be deteriorated; and if it is more than 0.6 µm, the surface layer cannot be the composite construction of Sn and CuSn alloy and may be filled only by Sn, so that the dynamic friction coefficient is increased. More preferred average thickness of the Sn-based surface layer is from 0.3 µm to 0.5 µm.

If the exposed-area rate of the CuSn alloy layer at the surface of the Sn-based surface layer is less than 1%, the dynamic friction coefficient cannot be suppressed to 0.3 or less; and if it exceeds 40%, the electrical-connection characteristic such as the soldering wettability and the like is deteriorate. More preferred exposed-area rate is 2% to 20%.

If the average value of the equivalent-circle diameters of the exposed portions of the CuSn alloy layer which are exposed at the surface of the Sn-based surface layer is less than 0.1 µm, the exposed-area rate of the CuSn alloy layer cannot be 1% or more; and if it exceeds 1.5 µm, the soft Sn between the CuSn alloy layer cannot lubricate enough, so that the dynamic friction coefficient cannot be suppressed to 0.3 or less. More preferred equivalent-circle diameter is 0.2 µm to 1.0 µm.

In addition, it is known that the dynamic friction coefficient of the Sn-based surface layer is increased when a vertical load for measuring the dynamic friction coefficient is decreased; and the present invention can be operative for small terminals because the dynamic friction coefficient is scarcely varied even though the vertical load is decreased.

In the tin-plated copper-alloy material for terminal of the present invention, it is preferable that Ni be contained not less than 1 at% and not more than 25 at% in the CuSn alloy layer. The content of Ni is set 1 at% or more, because if it is less than 1 at%, a compound-alloy layer in which a part of Cu in Cu₆Sn₅ is displaced by Ni cannot be generated and the precipitous asperity cannot formed; and the content ofNi is set 25 at% or less, because if it is more than 25 at%, the shape of the CuSn alloy layer is too fine, and there is a case in which the dynamic friction coefficient, cannot be suppressed to 0.3 or less.

A method for producing tin-plated copper-alloy material for terminal according to the present invention is a method for producing tin-plated copper-alloy material for terminal on which a Ni or Ni alloy layer/a NiSn alloy layer/a CuSn alloy layer/a Sn-based surface layer are formed on a substrate made of Cu or Cu alloy by forming a Ni or Ni alloy plating layer, a Cu plating layer and a Sn plating layer in sequence on the substrate and then operating a reflow treatment: a thickness of the Ni or Ni alloy plating layer is set in a range of not less than 0.05 µm to not more than 1.0 µm; a thickness of the Cu plating layer is set in a range of not less than 0.05 µm to not more than 0.20 µm; a thickness of the Sn plating layer is set in a range of not less than 0.5 µm to not more than 1.0 µm; and the reflow treatment is operated by heating the substrate until surface temperature of the substrate is increased to not lower than 240°C and not higher than 360°C, then rapidly cooling after holding the temperature for a predetermined duration set as below (1) or (2):

(1) if the thickness of the Sn plating layer is in a range of not less than 0.5 µm and less than 0.7 µm: in a case in which the thickness of the Cu plating layer is in a range of not less than 0.05 µm and less than 0.16 µm, the predetermined duration is not shorter than 1 second and not longer than 6 seconds; or in a case in which the thickness of the Cu plating layer is in a range of not less than 0.16 µm and not more than 0.20 µm, the predetermined duration is not shorter than 3 seconds to not longer than 9 seconds, or

(2) if the thickness of the Sn plating layer is in a range of not less then 0.7 µm and not more than 1.0 µm: in the case in which the thickness of the Cu plating layer is in a range of not less than 0.05 µm and less than 0.16 µm, the predetermined duration is not shorter than 3 seconds and not longer than 9 seconds; or in the case in which the thickness of the Cu plating layer is in a range of not less than 0.16 µm and not more than 0.20 µm, the predetermined duration is not shorter than 6 seconds and not longer than 12 seconds.

As described above, by plating the substrate with Ni or Ni alloy, (Ni, Cu)₃Sn₄ alloy and (Cu, Ni)₆Sn₅ alloy are formed after the reflowing, thereby forming the precipitous asperity of the CuSn alloy layer with the dynamic friction coefficient not more than 0.3.

If the thickness of the Ni or Ni plating layer is less than 0.05 µm, the content ofNi in (Cu, Ni)₆Sn₅ alloy is low, so that the CuSn alloy with the precipitous asperity cannot be formed; or if it is more than 1.0 µm, bending or the like are impossible. When utilizing the Ni or Ni alloy layer as a barrier layer for preventing diffusion of Cu from the substrate and for improving heat resistance, preferred thickness of the Ni or Ni alloy layer is not less than 0.1 µm. The plating layer is not limited to Ni; Ni alloy such as Ni-Co, Ni-W or the like may be acceptable.

If the thickness of the Cu plating layer is less than 0.05 µm, the content ofNi in (Cu, Ni)₆Sn₅ alloy is high, the shape of the CuSn alloy is too fine; or if it is more than 0.20 µm, the content ofNi in (Cu, Ni)₆Sn₅ alloy is low, the CuSn alloy with the precipitous asperity cannot be formed.

If the thickness of the Sn plating layer is less than 0.5 µm, the electrical-connection characteristic is deteriorated since the Sn-based surface layer after reflowing is thin; or if it is more than 1.0 µm, the exposure of the CuSn alloy layer at the surface is small, so it is difficult to suppress the dynamic friction coefficient to 0.3 or less.

In the reflow treatment, after rising the surface temperature of the substrate to 240°C or higher and 360°C or lower, it is important to hold the temperature for not shorter than 1 second and not longer than 12 seconds and then rapidly cool. In this case, there are the preferable hold time in the range of 1 to 12 seconds in accordance with the thickness of the Cu plating layer and the thickness of the Sn plating layer; if the thickness of the plating layer is thin, the hold time is short, or it is thick, the holding time is required to be long. If the temperature is lower than 240°C or the hold time is too short, dissolution of Sn is not proceeded and desired CuSn alloy layer cannot be obtained; or the temperature is higher than 360°C or the hold time is too long, CuSn alloy is developed too much, so that the exposed-area rate at the surface is too large and oxidation of the Sn-based surface layer is undesirably advanced.

### Effects of the Invention

According to the present invention, by reducing the dynamic friction coefficient, low contact resistance, excellent soldering wettability, and low insertion power can be successful together, so that it is suitable for a small terminal because it is effective even though with a low load. Particularly, for terminals which are used for a vehicle, electronic parts and the like, the superiority can be demonstrated in portions in which a low insertion power for engaging, a stable contact resistance, and an excellent soldering wettability are necessitated.

### BRIEF DESCRIPTION OF THE DRAWINGS

FIG. 1 is an SIM photomicrograph showing a surface-state of a Sn-based surface layer of tin-plated copper-alloy material for terminal of Example 3.

FIG. 2 is an SIM photomicrograph showing a section of tin-plated copper-alloy material for terminal of Example 3 with magnified by 2 times in a vertical direction.

FIG. 3 is an SIM photomicrograph showing a surface-state of a Sn-based surface layer of copper-alloy material for terminal of Comparative Example 4.

FIG. 4 is an SIM photomicrograph showing a section of copper-alloy material for terminal of Comparative Example 4 with magnified by 2 times in a vertical direction.

FIG. 5 is an STEM image showing a section of tin-plated copper-alloy material for terminal of Example 2.

FIG. 6 is an analytical graph by EDS along the white line in FIG. 5.

FIG. 7 is an STEM image showing a section of copper-alloy material for terminal of Comparative Example 4.

FIG. 8 is an analytical graph by EDS along the white line in FIG. 7.

FIG. 9 is a front view schematically showing an apparatus for measuring dynamic friction coefficient.

### DESCRIPTION OF THE PREFERRED EMBODIMENTS

An embodiment of tin-plated copper-alloy material for terminal according to the present invention will be explained.

The tin-plated copper-alloy material for terminal of the present invention is constructed as: a Sn-based surface layer is formed on a surface of a substrate made of Cu or Cu alloy; and a CuSn alloy layer/a NiSn alloy layer/a Ni or Ni alloy layer are formed in sequence from the Sn-based surface layer between the Sn-based surface layer and the substrate.

The substrate may be made of Cu or Cu alloy, and the composition thereof is not particularly limited.

The Ni or Ni alloy layer is a layer which is made of pure Ni or Ni alloy such as Ni-Co, Ni-W, and the like.

The CuSn alloy layer is a compound-alloy layer containing Cu₆Sn₅ as a major proportion and a part of Cu in the Cu₆Sn₅ is displaced by Ni; and the NiSn alloy layer is a compound-alloy layer containing Ni₃Sn₄ as a major proportion and a part of Ni in the Ni₃Sn₄ is displaced by Cu. Those compound layers are made by forming a Ni plating layer, a Cu plating layer, and a Sn plating layer in sequence on the substrate and then reflowing as below, so that the NiSn alloy layer and the CuSn alloy layer are made in sequence on the Ni or Ni alloy layer.

A boundary face between the CuSn alloy layer and the Sn-based surface layer is made precipitous asperity; and an average interval S of point peaks of the CuSn alloy layer is not less than 0.8 µm and no more than 2.0 µm. The average interval S of the point peaks is obtained by drawing out a reference length from a roughness curve along a mean line thereof, calculating a length of the mean line corresponding to a distance between the adjacent peak points, and averaging the distances between the plurality of peak points in the reference length. The roughness curve can be obtained by measuring a surface of the CuSn alloy layer after removing the Sn-based surface layer by etchant.

An average thickness of the Sn-based surface layer is not less than 0.2 µm and not more than 0.6 µm, a part of the CuSn alloy layer is exposed at a surface of the Sn-based surface layer. An exposed-area rate thereof is 1% or more and 40% or less; and an average of equivalent-circle diameter of exposed portions of the CuSn alloy layer is not less than 0.1 µm and not more than 1.5 µm.

In the material for terminal having such the structure, low dynamic friction coefficient of 0.3 or less can be actualized as: by existence of the (Ni, Cu)₃Sn₄ layer in which a part of Ni is displaced by Cu under the (Cu, Ni)₆Sn₅ alloy layer in which a part of Cu is displaced by Ni, the CuSn alloy layer has precipitous asperity in which the average interval S of the peak points is not less than 0.8 µm and not more than 2.0 µm; a depth range of several hundreds nm from the surface of the Sn-based surface layer is a composite construction of the hard CuSn alloy layer and the Sn-based surface layer; a part of the hard CuSn alloy layer is slightly exposed at the Sn-based surface layer, so that the soft Sn acts as lubricant around the exposed CuSn alloy layer. The exposed-area rate of the CuSn alloy layer is limited to a range of not less than 1% and not more than 40%, so that the excellent electrical-connection characteristic of the Sn-based surface layer cannot be deteriorated.

In this case, the Ni content in the Cu₆Sn₅ alloy layer is not less than 1 at% and not more than 25 at%. The Ni content is set not less than 1 at%; because if it is less than 1 at%, the compound-alloy layer in which a part of Cu in Cu₆Sn₅ is displaced by Ni cannot be made, so that the precipitous asperity cannot be made. The Ni content is set not more than 25 at%; because if it is more than 25 at%, the shape of the CuSn alloy layer is too fine, and there is a case in which the dynamic friction coefficient cannot be suppressed to 0.3 or less.

On the other hand, the Cu content in Ni₃Sn₄ alloy layer is preferably not less than 5 at% and not more than 20 at%. The condition in which the Cu content is low means that the Ni content in Cu₆Sn₅ is also low, and the precipitous asperity cannot be made. Note that in a condition in which Cu is not displaced in Ni₃Sn₄, Ni is seldom displaced in Cu₆Sn₅. The upper limit is set because if Cu actually exceeds 20%, Cu does not enter into Ni₃Sn₄,

The average thickness of the Sn-based surface layer is set not less than 0.2 µm and not more than 0.6 µm: because if it is less than 0.2 µm, the soldering wettability and the electrical-connection reliability are liable to be deteriorated; or if it is more than 0.6 µm, the surface layer is not made as a composite construction of Sn and CuSn alloy, so that the dynamic friction coefficient is increased since it is filled only by Sn. More preferably, the average thickness of the Sn-based surface layer is 0.3 µm to 0.5 µm.

If the exposed-area rate of the CuSn alloy layer at the surface of the Sn-based surface layer is less than 1%, the dynamic friction coefficient cannot be suppressed to 0.3 or less; or if it is more than 40%, the electrical-connection characteristic such as the soldering wettability or the like is deteriorated. More preferably, the exposed-area rate is 2% to 20%.

If the particle diameter of the CuSn alloy layer which is exposed at the surface of the Sn-based surface layer is less than 0.1 µm, the exposed-area rate of the CuSn alloy layer cannot be 1% or more; or if it is more than 1.5 µm, the soft Sn between the hard CuSn alloy layer cannot adequately perform as lubrication, so that the dynamic friction coefficient cannot be suppressed to 0.3 or less. More preferably, the equivalent-circle diameter is 0.2 µm to 1.0 µm.

It is known that when a vertical load of measuring the dynamic friction coefficient is low, the dynamic friction coefficient is high at the Sn-based surface layer. However, the dynamic friction coefficient is scarcely changed in the invention even though the vertical load is reduced, the effect can be actualized for using small terminals.

Next, a method for producing the material for terminal will be explained.

A plate made of Cu or Cu alloy such as Cu-Ni-Si based alloy is prepared for a substrate. Surfaces of the plate are cleaned by treatments of degreasing, pickling and the like, then Ni plating, Cu plating and Sn plating is operated in sequence.

In Ni plating, an ordinary Ni-plating bath can be used; for example, a sulfate bath containing sulfuric acid (H₂SO₄) and nickel sulfate (NiSO₄) as a major ingredients. Temperature of the plating bath is set to not lower than 20°C and not higher than 50°C; and current density is set to 1 to 30 A/dm². A film thickness of the Ni plating layer is set not less than 0.05 µm to 1.0 µm or less. If it is less than 0.05 µm, the Ni content contained in (Cu, Ni)₆Sn₅ alloy is reduced, so that the CuSn alloy having the precipitous asperity cannot be made; or it is more than 1.0 µm, bending or the like is difficult.

In Cu plating, an ordinary Cu-plating bath can be used; for example, a copper-sulfate plating bath or the like containing copper sulfate (CuSO₄) and sulfuric acid (H₂SO₄) as major ingredients. Temperature of the plating bath is set to 20 to 50°C; and current density is set to 1 to 30 A/dm². A film thickness of the Cu plating layer made by the Cu plating is set to 0.05 µm or more and 0.20 µm or less. If it is less than 0.05 µm, the Ni content contained in (Cu, Ni)₆Sn₅ alloy is increased, so that the shape of the CuSn alloy is too fine; or if it is more than 0.20 µm, the Ni content contained in the (Cu, Ni)₆Sn₅ alloy is reduced, so that the CuSn alloy having the precipitous asperity cannot be made.

As plating bath for making the Sn plating layer, an ordinary Sn-plating bath can be used; for example, a sulfate bath containing sulfuric acid (H₂SO₄) and stannous sulphate (SnSO₄) as major ingredients. Temperature of the plating bath is set to 15 to 35°C; and current density is set to 1 to 30 A/dm². A film thickness of the Sn plating layer is set to 0.5 µm or more and 1.0 µm or less. If the thickness of the Sn plating layer is less than 0.5 µm, the Sn-based surface layer is thin after reflowing, so that the electrical-connection characteristic is deteriorated; or if it is more than 1.0 µm, the exposure of the CuSn alloy layer at the surface is reduced, so that it is difficult to suppress the dynamic friction coefficient to 0.3 or less.

As the condition for the reflow treatment, the substrate is heated in a state in which a surface temperature of the substrate is not lower than 240°C and not higher than 360°C for not less than 1 second and not more than 12 seconds in a reduction atmosphere, and then the substrate is rapidly cooled. More preferably, the substrate is heated in a state in which the surface temperature is 260°C to 300°C for 5 seconds to 10 seconds, and then rapidly cooled. In this case, a hold time is adequate in a range of 1 second to 12 seconds in accordance with the thickness of the Cu plating layer and the thickness of the Sn plating layer as below; so that the hold time is short when the plating thickness is thin, and the long hold time is necessary when the plating thickness is thick.

<Hold Time After Increasing Substrate Temperature to 240°C or more and 360°C or less>

(1) When the thickness of the Sn plating layer is not less than 0.5 µm and less than 0.7 µm: if the thickness of the Cu plating layer is not less than 0.05 µm and less than 0.16 µm, 1 second or more and 6 seconds or less; if the thickness of the Cu plating layer is not less than 0.16 µm and not more than 0.20 µm, 3 seconds or more and 9 seconds or less

(2) When the thickness of the Sn plating layer is not less than 0.7 µm and not more than 1.0 µm: if the thickness of the Cu plating layer is not less than 0.05 µm and less than 0.16 µm, 3 seconds or more and 9 seconds or less; if the thickness of the Cu plating layer is not less than 0.16 µm and not more than 0.20 µm, 6 seconds or more and 12 seconds or less

If it is heated in a state in which the temperature is less than 240°C and the hold time is less than the time shown in the above (1) and (2), dissolution of Sn is not proceeded; or if it is heated in a state in which the temperature is more than 360°C and the hold time is more than the time shown in the above (1) and (2), crystal of CuSn alloy is largely grown so that the desired shape cannot be obtained, and the Sn-based surface layer which remains at the surface is too small (the exposed-area rate of the CuSn alloy layer to the surface is too large) because the CuSn alloy layer reaches to the surface. Furthermore, if a heating condition is high, it is not desirable because oxidation of the Sn-based surface layer is proceeded.

### [Examples]

Corson copper alloy (Cu-Ni-Si alloy) having a plate thickness of 0.25 mm was prepared as the substrate, and Ni-plating, Gu-plating and Sn-plating were performed in sequence on the substrate. In this case, plating conditions of the Ni-plating, the Cu-plating and the Sn-plating were the same in Examples and Comparative Examples as shown in Table 1. In Table 1, Dk denotes current density of a cathode; and ASD denotes abbreviation of A/dm².

**[Table 1]**

| | Ni PLATING | | Cu PLATING | | Sn PLATING | |
|---|---|---|---|---|---|---|
| COMPOSITION OF PLATING SOLUTION | NICKEL SULFATE | 300 g/L | COPPER SULFATE | 250 g/L | TIN SULFATE | 75 g/L |
| | SULFURIC ACID | 2 g/L | SULFURIC ACID | 50 g/L | SULFURIC ACID | 85 g/L |
| | | | | | ADDITIVE | 10 g/L |
| SOLUTION TEMPERATURE | 45°C | | 25°C | | 25°C | |
| Dk | 5 ASD | | 5 ASD | | 5 ASD | |

After plating at the thickness shown in Table 2, in Examples and Comparative Examples, the surface temperature of the substrates were risen to 240 to 360°C in reduction atmosphere as reflow treatments; subsequently, the substrates were heated for the time shown in the aforementioned (1) and (2) in accordance with the plating thickness, and then water-cooled.

The hold time shown in (1) and (2) are tabled as Table 2.

**[Table 2]**

| | Cu PLATING THICKNESS (µm) | |
|---|---|---|
| Sn PLATING THICKNESS (µm) | 0.05 or more and less than 0.16 | 0.16 or more and 0.20 or less |
| 0.5 or more and less than 0.7 | 1 or more and 6 or less | 3 or more and 9 or less |
| 0.7 or more and 1.0 or less | 3 or more and 9 or less | 6 or more and 12 or less |

Comparative Examples in which Ni-plating thickness, Cu-plating thickness and Sn-plating thickness were varied were made.

Those conditions of samples were shown in Table 3.

**[Table 3]**

| | THICKNESS OF PLATING LAYER (µm) | | | REFLOW CONDITION | |
|---|---|---|---|---|---|
| | Ni | Cu | Sn | SUBSTRATE TEMPERTURE (°C) | HOLD TIME (sec) |
| EXAMPLE 1 | 0.3 | 0.05 | 0.5 | 240 | 3 |
| EXAMPLE 2 | 0.3 | 0.1 | 0.8 | 270 | 6 |
| EXAMPLE 3 | 0.3 | 0.15 | 0.8 | 270 | 3 |
| EXAMPLE 4 | 0.3 | 0.2 | 0.8 | 270 | 6 |
| EXAMPLE 5 | 0.05 | 0.1 | 0.6 | 360 | 1 |
| EXAMPLE 6 | 0.05 | 0.15 | 1.0 | 270 | 9 |
| EXAMPLE 7 | 0.1 | 0.2 | 0.7 | 270 | 12 |
| EXAMPLE 8 | 0.3 | 0.2 | 0.6 | 270 | 9 |
| COMPARATIVE EXAMPLE 1 | 0.02 | 0.15 | 0.8 | 270 | 3 |
| COMPARATIVE EXAMPLE 2 | 0.3 | 0.2 | 0.4 | 270 | 6 |
| COMPARATIVE EXAMPLE 3 | 0.3 | 0.03 | 0.8 | 270 | 3 |
| COMPARATIVE EXAMPLE 4 | 0.3 | 0.3 | 0.8 | 270 | 6 |
| COMPARATIVE EXAMPLE 5 | 0.3 | 0.15 | 1.2 | 270 | 6 |
| COMPARATIVE EXAMPLE 6 | 0.3 | 0.2 | 0.6 | 270 | 12 |

With respect to those samples, the thickness of the Sn-based surface layer after reflowing, the Ni content in (Cu, Ni)₆Sn₅ alloy, presence or absence of the (Ni, Cu)₃Sn₄ alloy layer, the exposed-area rate of the CuSn alloy layer on a Sn-based surface layer, and the equivalent-circle diameter of the exposed portions were detected; and the dynamic friction coefficient, the soldering wettability, glossiness, and the electrical-connection reliability were evaluated.

The thicknesses of the Sn-based surface layer after reflowing were measured by an X-ray fluorescent analysis thickness meter (SFT9400) by SII Nanotechnology Inc. At first, all the thickness of the Sn-based surface layers of the samples after reflowing were measured, and then the Sn-based surface layers were removed by soaking for a few minutes in etchant for abrasion of the plate coatings made from components which do not corrode CuSn alloy but etch pure Sn, for example, by L80 or the like by Laybold Co., Ltd. so that the bottom CuSn alloy layers were exposed. Then, the thicknesses of the CuSn alloy layers in pure Sn conversion were measured. Finally, (the thicknesses of all the Sn-based surface layers minus the thickness of the CuSn alloy layer in pure Sn conversion) was defined as the thickness of the Sn-based surface layer.

The Ni content in the (Cu, Ni)₆Sn₅ alloy layer and the presence or absence of the (Ni, Cu)₃Sn₄ alloy layer were detected from sectional STEM images and by EDS linear analysis.

The exposed-area rate and the equivalent-circle diameter of the CuSn alloy layer were observed at an area of 100 × 100 µm by a scanning ion microscope after removing surface-oxide films. In accordance with a measurement principle, if Cu₆Sn₅ exists in a depth area of substantially 20 nm from an outermost surface, it is imaged by white; so that an area-rate of the white portions with respect to a whole area of measuring portion was regarded as the exposed-area rate of the CuSn alloy using an image processing software, the equivalent-circle diameter was calculated from the white portions, and an average value of them was regarded as the equivalent-circle diameter of CuSn alloy.

The average interval S between the point peaks of the CuSn alloy layer was obtained by: removing the Sn-based surface layer by soaking in the etchant for abrasion of the Sn-plate coating so that the bottom CuSn alloy layer was exposed; and then obtaining from an average of measured value measured at 10 points including 5 points along a longitudinal direction and 5 points along a short direction in a condition of an object lens of 150 magnifications (a measuring field of 94 µm × 70 µm) using a laser microscope (VK-9700) made by Keyence Corporation.

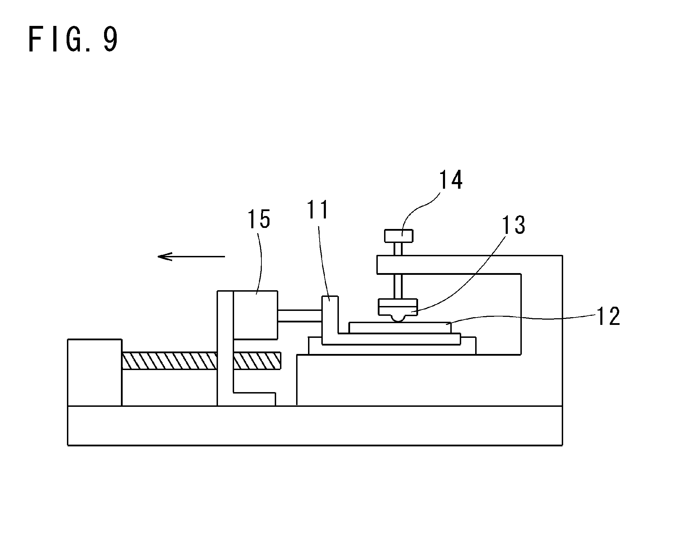

The dynamic friction coefficient was obtained by: preparing plate-shaped male test pieces and half-spherical female test pieces having an inner diameter of 1.5 mm of the samples so as to simulate a contact of a male terminal and a female terminal in an insertion-type connector; and measuring a friction force between the test pieces using a friction-measuring instrument (µV1000) made by Trinity Lab INC. It is explained with reference to FIG. 9 that: the male test piece 12 was fixed on a horizontal table 11, a spherical convex of the female test piece 13 was deposited on the male test piece 12 so that plated surfaces were in contact with each other, and the male test piece 12 was pressed at a load P of 100 to 500 gf by the female test piece 13 with a weight 14. In a state in which the load P was applied, a friction force F was measured by a load cell 15 when the male test piece 12 was drawn in the horizontal direction shown by an arrow for 10 mm at a frictional speed of 80 mm/minute. The dynamic friction coefficient (=Fav/P) was obtained from an average value Fav of the friction force F and the load P. Both a case in which the load was 0.98 N (100 gf) and a case in which the load was 4.9 N (500 gf) were described in Table 3.

With respect to the soldering wettability, the test pieces were cut out to have width of 10 mm; so that zero-cross time was measured by a meniscograph method using a rosin-based active flux. (The test pieces were soaked in Sn-37%Pb solder with solder-bath temperature of 230°C; so that the soldering wettability was measured in a condition in which a soaking speed was 2 mm/sec, a soaking depth was 2 mm, and a soaking time was 10 seconds.) If the soldering zero-cross time was 3 seconds or less, it was evaluated as "O"; or it was more than 3 seconds, it was evaluated as "X".

The glossiness was measured using a gloss meter (model number: PG-1M) made by Nippon Denshoku Industries Co., Ltd. with an entry angle of 60° in accordance with JIS Z 8741.

In order to evaluate the electrical-connection reliability, the contact resistance was measured with heating in the atmosphere at 150°C × 500 hours. The measuring method was in accordance with JIS-C-5402, load variation from 0 to 50 g - contact resistance in sliding type (1 mm) was measured using a four-terminal contact-resistance test equipment (made by Yamasaki-Seiki Co., Ltd. : CRS-113-AU), so that a contact resistance value was evaluated when the load was 50 g.

Those measurement results and the evaluation results are described in Table 4.

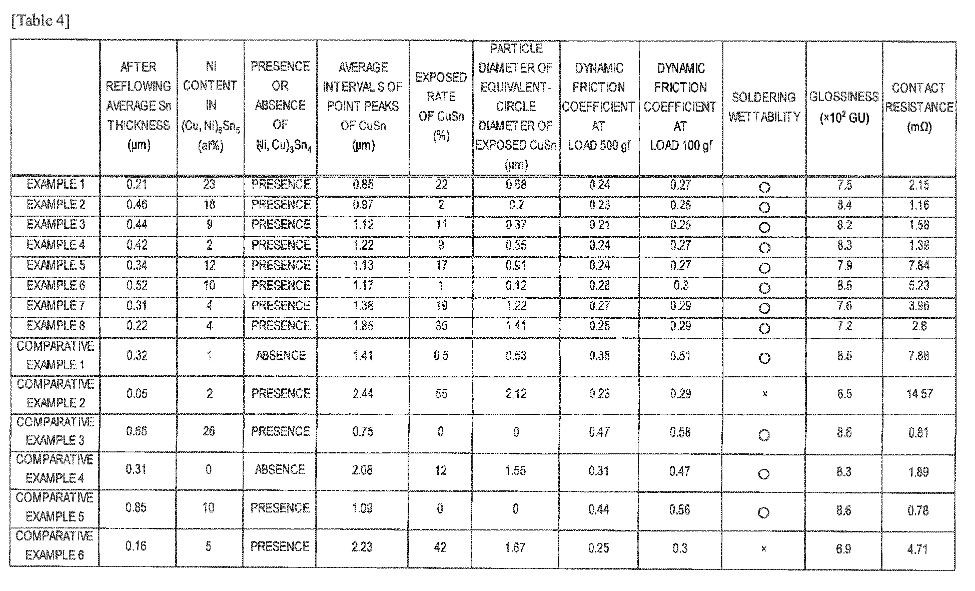

Obviously from Table 4, in every Example, the dynamic friction coefficient was small as 0.3 or less, the soldering wettability was good, the glossiness was high, the exterior appearance was good and the contact resistance was 10 mΩ or less. Especially, Examples 1 to 4, 7, and 8 in which the Ni-plating thickness was 0.1 µm or more showed low contact resistance of 4 mΩ or less. On the other hand, in Comparative Examples 1, 3, and 5, the dynamic friction coefficient was more than 0.3 because the exposed-area rate of CuSn alloy was less than 1%; in Comparative Example 2, the soldering wettability and the glossiness were poor because the exposed-area rate was more than 25%; and in Comparative Example 4, because Ni was not contained in Cu₆Sn₅ and the existence of (Ni, Cu)₃Sn₄ was not confirmed, the average value of the equivalent-circle diameter of the exposed portion exceeded 1.5 µm, so that the dynamic friction coefficient exceeds 0.3. In Comparative Example 6, because a reflow condition was deviated from the condition in Table 2, the exposed-area rate of CuSn alloy exceeded 40%, and the soldering wettability was poor and the glossiness was deteriorated since the Sn thickness was small.

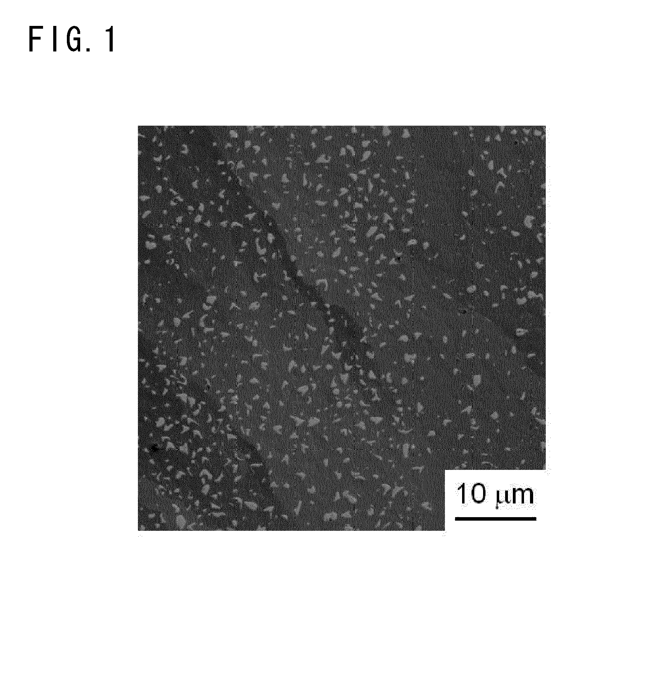

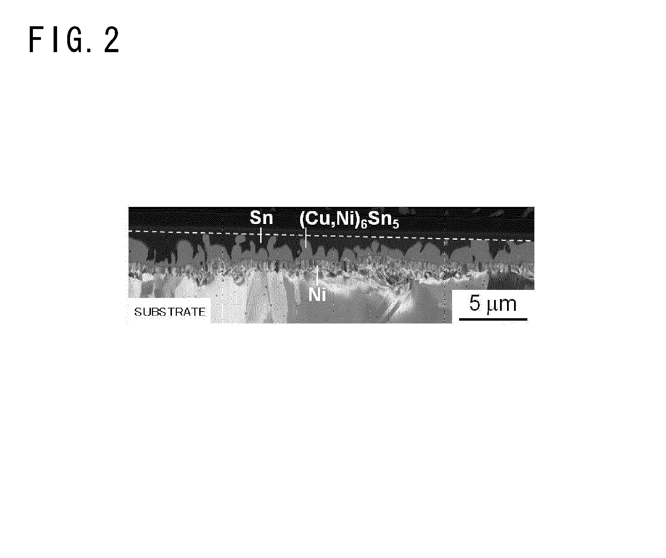

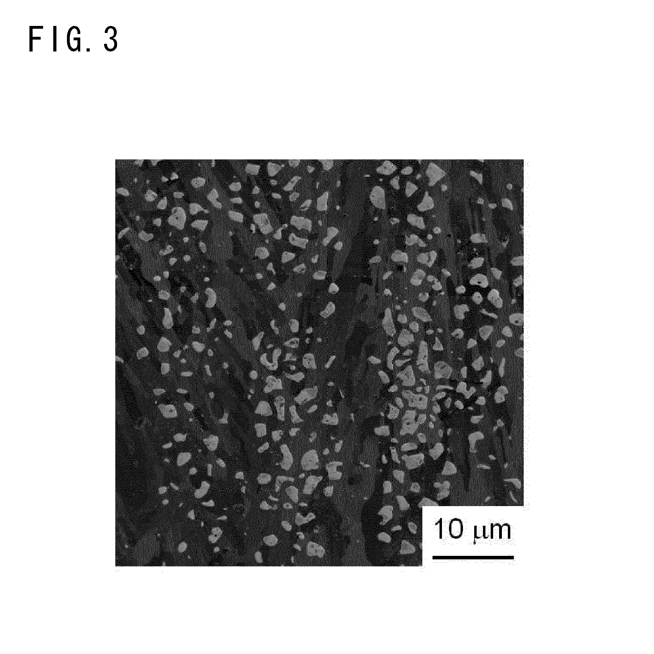

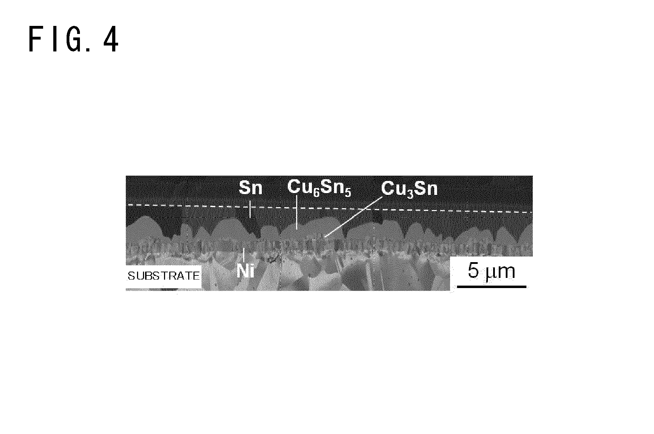

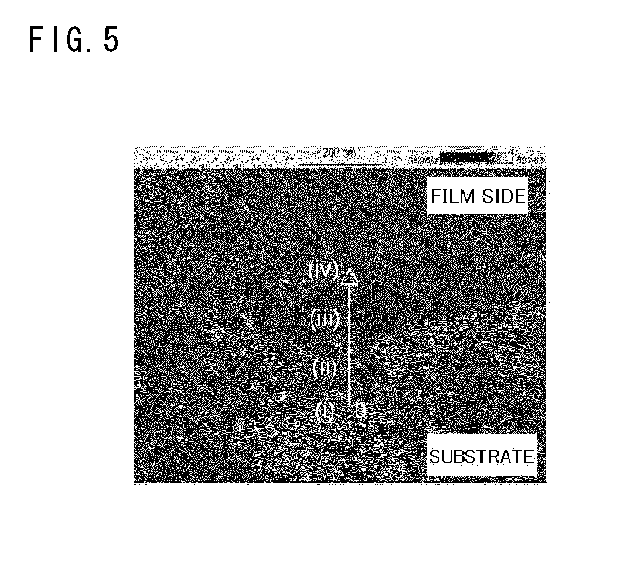

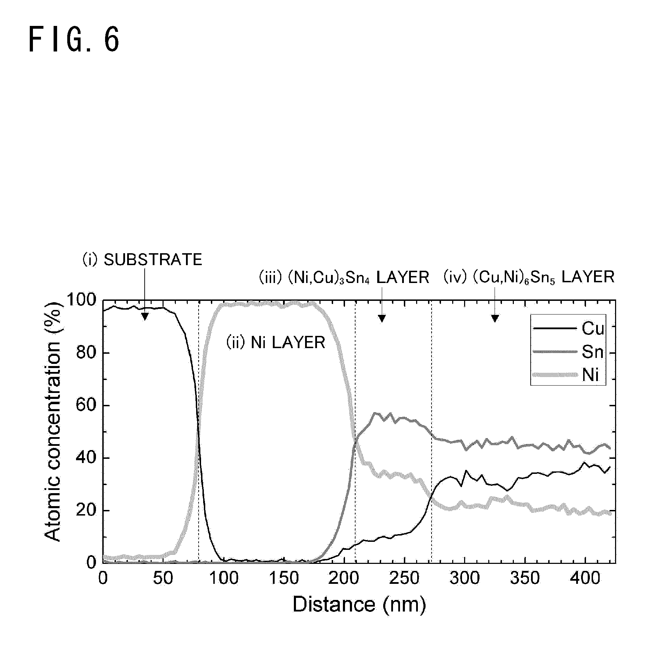

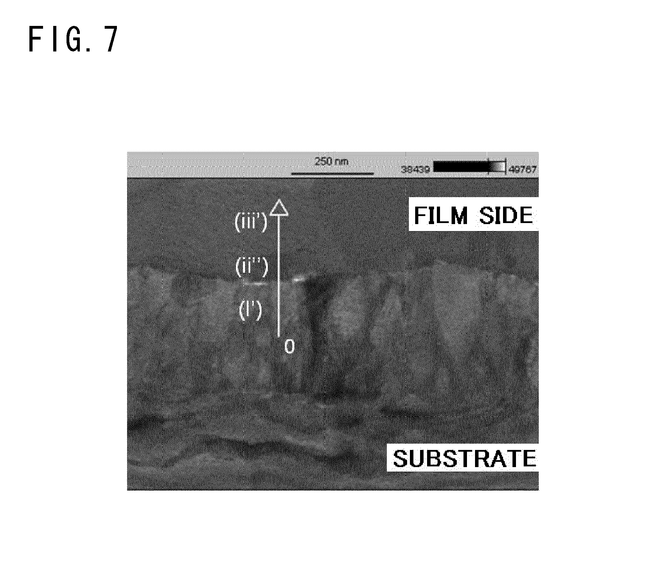

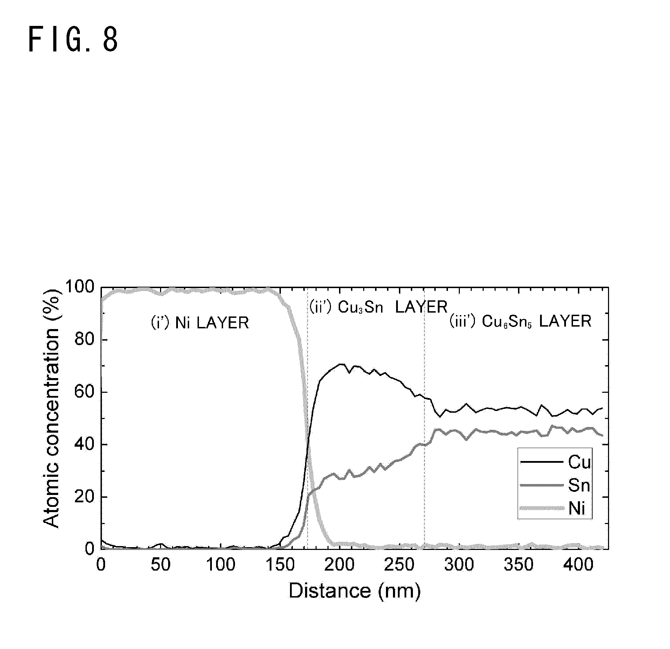

FIG. 1 and FIG. 2 are photomicrographs of the sample of Example 3; FIG. 3 and FIG. 4 are photomicrographs of Comparative Example 4; FIG. 5 and FIG. 6 are an STEM image of a section and an EDS linear analytical result of Example 2; and FIGS. 7 and 8 are an STEM image of a section and an EDS linear analytical result of Comparative Example 4. In FIG. 5 and FIG. 6, the substrate is denoted by (i), the Ni layer is denoted by (ii), the (Ni, Cu)₃Sn₄ alloy layer is denoted by (iii), and the (Cu, Ni)₆Sn₅ alloy layer is denoted by (iv). In FIG. 7 and FIG. 8, the Ni layer is denoted by (i'), the Cu₃Sn alloy layer is denoted by (ii'), and the Cu₆Sn₅ alloy layer is denoted by (iii').

As recognized by comparing those photographs, in Examples, the asperity of the CuSn alloy layer was precipitous, the part of the CuSn alloy layer was dispersed and exposed at the Sn-based surface layer, and the particle diameter was small. As shown in FIG. 6, it is recognized that: Ni was contained in Cu₆Sn₅; and the Ni₃Sn₄ layer containing Cu at the boundary face between the Ni layer and the Cu₆Sn₅ layer was made. The Cu contents in the Ni₃Sn₄ layer in the material for terminal of Examples were supposed in a range of 5 to 20 at%. For example, it was 11 at% in Example 2.

In Comparative Examples, it was recognized that: the structure was made so that the relatively thick Cu₃Sn layer was found at the bottom of the CuSn alloy layer and the Cu₆Sn₅ layer was made on them as shown in FIG. 4, and the asperity of the CuSn alloy layer was rough and gentle; the particle diameter of the CuSn alloy layer was large as shown in FIG. 3; and Ni₃Sn₄ layer was not made, and Ni was not contained in Cu₆Sn₅ layer as shown in FIG. 8.

### [Explanation of References]

- 11: table
- 12: male test piece
- 13: female test piece
- 14: weight
- 15: load cell

## Claims

1. A tin-plated copper-alloy material for terminal wherein:
a Sn-based surface layer is formed on a surface of a substrate made of Cu or Cu alloy, and a CuSn alloy layer/a NiSn alloy layer/a Ni or Ni alloy layer are formed in sequence from the Sn-based surface layer between the Sn-based surface layer and the substrate,
the CuSn alloy layer is a compound-alloy layer containing Cu₆Sn₅ as a major proportion and a part of Cu in the Cu₆Sn₅ is displaced by Ni;
the NiSn alloy layer is a compound-alloy layer containing Ni₃Sn₄ as a major proportion and a part of Ni in the Ni₃Sn₄ is displaced by Cu;
an average interval S of point peaks of the CuSn alloy layer is not less than 0.8 µm and not more than 2.0 µm;
an average thickness of the Sn-based surface layer is not less than 0.2 µm and not more than 0.6 µm;
an exposed-area rate of the CuSn alloy layer exposed at a surface of the Sn-based surface layer is not less than 1% and not more than 40%;
an average of equivalent-circle diameter of exposed portions of the CuSn alloy layer exposed at the surface of the Sn-based surface layer is not less than 0.1 µm and not more than 1.5 µm; and
dynamic friction coefficient is not more than 0.3.

2. The tin-plated copper-alloy material for terminal according to Claim 1, wherein Ni is contained not less than 1 at% and not more than 25 at% in the CuSn alloy layer.

3. A method for producing tin-plated copper alloy material for terminal wherein:
a Ni or Ni alloy layer/a NiSn alloy layer/a CuSn alloy layer/a Sn-based surface layer are formed on a substrate made of Cu or Cu alloy by forming a Ni or Ni alloy plating layer, a Cu plating layer and a Sn plating layer in sequence on the substrate and then operating a reflow treatment,
a thickness of the Ni or Ni alloy plating layer is set in a range of not less than 0.05 µm and not more than 1.0 µm;
a thickness of the Cu plating layer is set in a range of not less than 0.05 µm and not more than 0.20 µm;
a thickness of the Sn plating layer is set in a range of not less than 0.5 µm and not more than 1.0 µm; and
the reflow treatment is operated by heating the substrate until surface temperature of the substrate is increased to not lower than 240°C and not higher than 360°C, then rapidly cooling after holding the temperature for a predetermined duration set as below (1) or (2):
(1) if the thickness of the Sn plating layer is in a range of not less than 0.5 µm to less than 0.7 µm:
in a case in which the thickness of the Cu plating layer is in a range of not less than 0.05 to less than 0.16 µm, the predetermined duration is not shorter than 1 second to not more than 6 seconds; or
in a case in which the thickness of the Cu plating layer is in a range of not less than 0.16 µm to not more than 0.20 µm, the predetermined duration is not shorter than 3 seconds to not more than 9 seconds, or
(2) if the thickness of the Sn plating layer is in a range of not less then 0.7 µm to not more than 1.0 µm:
in the case in which he thickness of the Cu plating layer is in a range of not less than 0.05 to less than 0.16 µm, the predetermined duration is not shorter than 3 second to not more than 9 seconds; or
in a case in which the thickness of the Cu plating layer is in a range of not less than 0.16 µm to not more than 0.20 µm, the predetermined duration is not shorter than 6 seconds to not more than 12 seconds.
